# FASCICULE DE BREVET EUROPEEN

(11) **EP 4 394 482 B1**
(45) Date de publication et mention de la délivrance du brevet: **18.03.2026**
(21) Numéro de dépôt: 23215805.5
(22) Date de dépôt: 12.12.2023
(51) Int. Cl.: G02B 27/01

(54) **DISPOSITIF DE GÉNÉRATION D'IMAGES, PROCÉDÉ DE GESTION DE LA TEMPÉRATURE D'UN TEL DISPOSITIF ET AFFICHEUR TÊTE HAUTE COMPORTANT CE DISPOSITIF**
BILDERZEUGUNGSVORRICHTUNG, VERFAHREN ZUR TEMPERATURVERWALTUNG EINER SOLCHEN VORRICHTUNG UND HEAD-UP-ANZEIGE MIT DIESER VORRICHTUNG
IMAGE GENERATION DEVICE, METHOD FOR MANAGING THE TEMPERATURE OF SUCH A DEVICE AND HEAD-UP DISPLAY COMPRISING SUCH A DEVICE

(30) Priorité: 23.12.2022 FR 2214412
(43) Date de publication de la demande: 03.07.2024
(73) Titulaire: Valeo Comfort and Driving Assistance, 94000 Créteil (FR)
(72) Inventeur: BEN-NACHOUANE, Ayoub, 94000 Créteil (FR); MERMILLOD, Pierre, 94000 Créteil (FR)
(74) Mandataire: Delplanque, Arnaud

(56) Documents cités:
- CN-U- 211 425 696
- CN-U- 216 218 347
- KR-A- 20040 072 420
- US-A1- 2007 012 897
- US-A1- 2018 366 523

## Description

### Domaine technique

La présente invention concerne le domaine technique de l'automobile, et notamment le domaine technique des dispositifs d'affichage pour véhicule automobile.

L'invention concerne plus particulièrement un dispositif de génération d'images, un procédé de gestion de la température de ce dispositif et un afficheur tête haute comportant un tel dispositif.

### Arrière-plan technologique

Le principe des afficheurs tête haute pour véhicule est de projeter des images, comprenant par exemple des informations utiles à la conduite, directement dans le champ de vision d'un conducteur, notamment au niveau du pare-brise du véhicule.

A cette fin, les afficheurs tête haute comprennent un dispositif de génération d'images, par exemple une source lumineuse couplée à un écran. L'écran peut être par exemple une matrice d'éléments à transmittance variable comme un écran à cristaux liquide (LCD, pour « Liquid Crystal Display », en langue anglaise), ou un diffuseur dont la face amont est configurée pour être balayée par un faisceau laser et sur laquelle se forme l'image (technologie « laser scan », selon la dénomination anglaise usuelle). Les afficheurs tête haute comportent en outre un système optique de transmission de cette image vers une lame partiellement transparente, par exemple afin que le conducteur puisse voir les images sans détourner le regard de la route.

L'emplacement des afficheurs sous le pare-brise du véhicule automobile les rend susceptibles de recevoir un flux solaire circulant dans l'afficheur en suivant le chemin inverse des rayons lumineux issus de la source lumineuse et qui converge, après son passage dans le système optique, en un point de l'écran. La focalisation des rayons solaires, qui s'ajoute à l'élévation de température générée par la source lumineuse elle-même, est susceptible d'endommager l'écran.

Des solutions existent pour tenter de remédier à ce problème et comportent par exemple l'utilisation de capteurs de température placés localement à différents emplacements de l'écran. Ces solutions ne sont que partiellement satisfaisantes, puisque d'une part elles ne permettent qu'une détection locale de la température, et d'autre part elle peuvent entraver le trajet optique des rayons issus de la source lumineuse, et donc détériorer la qualité de l'image projetée. Le document US 2018/366523 A1 est pertinent pour la présente invention.

### Résumé de l'invention

La présente invention se propose de remédier aux problèmes susmentionnés en proposant un moyen de mesure de la température sur une large surface de l'écran, sans dégrader la qualité de l'image projetée.

Selon un aspect, il est proposé un dispositif de génération d'images comportant un écran qui comprend une zone centrale au moins en partie optiquement utile et une zone périphérique non optiquement utile, le dispositif comprenant un système de mesure de la température de l'écran qui comporte
- un capteur de température et
- un film opaque thermiquement conducteur configuré pour être en contact avec une face de l'écran, le film comportant au moins une première partie qui s'étend dans une zone non optiquement utile de la zone centrale et qui est en contact avec et thermiquement couplée au capteur de température.

Grâce au film thermiquement conducteur réalisé sur l'écran, la chaleur générée par le faisceau lumineux d'un module de rétro-éclairage ou par les rayons solaires peut être transférée jusqu'au capteur de température. En particulier, la première partie qui s'étend dans la zone centrale permet que la chaleur générée par un flux solaire focalisé en un point de l'écran soit captée par le système de gestion de la température quel que soit le point d'incidence du flux solaire. Il est ainsi possible de mesurer la température de l'écran et, par exemple, d'adapter le fonctionnement du dispositif de génération d'images en conséquence de façon à éviter une surchauffe. En outre, un film opaque sur les zones non optiquement utile permet d'empêcher les rayons lumineux d'atteindre l'écran et contribue donc à éviter son échauffement.

On considère par exemple ici qu'un film est thermiquement conducteur si sa conductivité thermique est supérieure ou égale à 60 W.m⁻¹.K⁻¹.

Selon un mode de réalisation, le film opaque thermiquement conducteur comporte une deuxième partie qui s'étend dans la zone périphérique et qui présente une continuité de matière avec la première partie.

Selon un mode de réalisation, la première partie est une languette qui s'étend dans la zone centrale depuis la deuxième partie.

Selon un mode de réalisation, la première partie est située à une distance d'au moins un millimètre de toute zone optiquement utile.

Selon un mode de réalisation, la première partie s'étend dans la zone centrale sur une longueur supérieure ou égale à trois millimètres.

Selon un mode de réalisation, le dispositif comporte une source lumineuse configurée pour émettre un flux lumineux au travers de l'écran et le film opaque thermiquement conducteur est en contact avec la face aval de l'écran, relativement au sens de propagation du flux lumineux.

Selon un mode de réalisation, le film thermiquement conducteur présente une conductivité thermique supérieure ou égale à 200 W.m⁻¹.K⁻¹, et de préférence supérieur ou égal à 398 W.m⁻¹.K⁻¹

Selon un mode de réalisation, le film opaque thermiquement conducteur est configuré pour absorber au moins 90% (et de préférence au moins 98%) des rayons lumineux dont la longueur d'onde est comprise entre 450 nanomètres et 750 nanomètres. En d'autres termes, le film opaque est configuré pour absorber les rayonnements de la lumière visible. Il est par exemple de couleur noire.

Selon un mode de réalisation, le film thermiquement conducteur est collé à l'écran à l'aide d'un matériau adhésif résistant à des températures supérieures ou égale 110°C.

Selon un autre aspect, il est proposé un procédé de gestion de la température d'un dispositif de génération d'images selon l'invention, comportant une comparaison d'une température estimée de l'écran et de la température mesurée par le capteur thermique et, si la température mesurée est supérieure à la température estimée, une réduction de l'intensité lumineuse produite par la source lumineuse.

Selon un mode de mise en œuvre, la température estimée de l'écran est obtenue à partir d'une mesure de la température d'une source lumineuse du dispositif de génération d'image et d'une mesure de la température ambiante.

Selon un autre aspect, il est proposé un afficheur tête haute comportant un dispositif de génération d'images selon l'invention et une unité de commande configurée pour commander l'écran et définir les zones optiquement utile et non optiquement utile de l'écran.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des figures

De plus, diverses autres caractéristiques de l'invention ressortent de la description annexée effectuée en référence aux dessins qui illustrent des formes, non limitatives, de réalisation de l'invention et où :
[Fig. 1] illustre un mode de réalisation d'un afficheur tête haute selon l'invention,
[Fig. 2] illustre un mode de réalisation d'un dispositif de génération d'images selon l'invention,
[Fig. 3] illustre un mode de mise en œuvre d'un procédé de gestion de la température selon l'invention,
[Fig. 4] illustre un autre mode de réalisation d'un dispositif de génération d'images selon l'invention.

Il est à noter que sur ces figures les éléments structurels et/ou fonctionnels communs aux différentes variantes peuvent présenter les mêmes références.

### Description détaillée

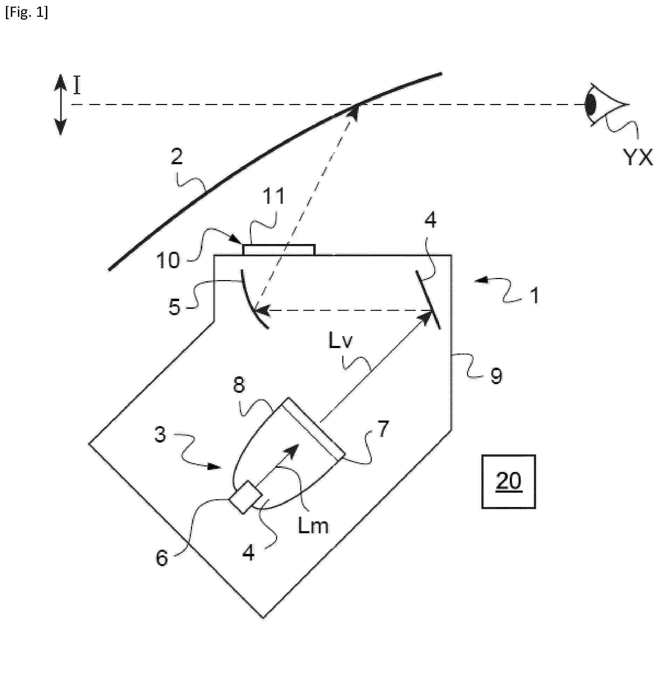

Sur la figure 1, on a représenté schématiquement les éléments principaux d'un afficheur 1 tête haute, destiné par exemple à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

À cet effet, l'afficheur 1 comprend une lame partiellement transparente 2 placée dans le champ de vision du conducteur, un dispositif de génération d'images 3 adapté à générer un faisceau lumineux aval Lv et un dispositif optique de transmission 4, 5 adapté à renvoyer, en direction de ladite lame partiellement transparente 2, le faisceau lumineux généré par le dispositif de génération d'images 3.

La lame partiellement transparente 2 est ici confondue avec le pare-brise du véhicule. Autrement dit, c'est le pare-brise du véhicule qui a la fonction de lame partiellement transparente pour l'afficheur tête haute 1.

Selon une variante, la lame partiellement transparente pourrait être un combineur, c'est-à-dire une lame partiellement transparente distincte du pare-brise et dédiée à l'afficheur tête haute 1. Un tel combineur serait placé entre le pare-brise du véhicule et les yeux YX du conducteur, sur le trajet du faisceau lumineux aval Lv.

Par ailleurs, ici, le dispositif optique de transmission comprend deux miroirs de repliement 4, 5 agencés de manière à réfléchir le faisceau lumineux aval Lv généré par le dispositif 3 de génération d'images en direction de la lame partiellement transparente 2. Les miroirs de repliement permettent avantageusement de placer le dispositif de génération d'image 3 dans une configuration dans laquelle il ne fait pas face à la lame partiellement transparente 2 et donc de le placer dans tout endroit adapté, typiquement sous le tableau de bord du véhicule.

Ici, un premier miroir de repliement 4 est un miroir plan, et un deuxième miroir de repliement 5 est un miroir qui possède une forme optimisée pour produire une image virtuelle de forme adaptée à la forme de la lame partiellement transparente 2, ici une forme incurvée, de façon à afficher l'image I de manière non déformée.

Selon d'autres modes de réalisation, le dispositif optique de transmission 4, 5 pourrait comprendre un nombre différent de miroirs et/ou des miroirs ayant des formes différentes, ainsi que d'autres éléments optiques tels qu'une lentille.

Le dispositif de génération d'images 3 comprend une source lumineuse 6, ici un module de rétro-éclairage, configurée pour produire un faisceau lumineux amont Lm, une matrice d'éléments à transmittance variable 7 formant écran et configurée pour être éclairée par le faisceau lumineux amont Lm et un réflecteur 8 interposé entre la source lumineuse 6 et la matrice 7.

La matrice 7 est configurée pour transmettre sélectivement le faisceau lumineux amont Lm de façon à former le faisceau lumineux aval Lv représentant une image à projeter dans le champ de vision du conducteur au moyen du dispositif optique de transmission 4, 5 et de la lame partiellement transparente 2.

Le dispositif d'affichage tête haute 1 comprend également un boîtier 9 (généralement opaque) qui renferme le dispositif de génération d'image 2 et le système optique de transmission 4, 5 afin notamment de protéger ces éléments contre d'éventuelles agressions extérieures (poussière, liquides, etc.).

Le boîtier 9 comprend une ouverture 10 à travers laquelle passe le faisceau lumineux aval Lv, ici après réflexion sur le deuxième miroir de repliement 5.

L'ouverture 10 du boîtier 9 est fermée par une fenêtre 11 (parfois désignée sous le terme anglo-saxon « cover window ») formée par exemple d'une feuille de matière plastique de type polycarbonate d'épaisseur comprise entre 0,25 mm et 0,75 mm.

L'afficheur tête haute comporte en outre une unité de commande 20 configurée pour commander le dispositif de génération d'image 3, notamment la source lumineuse 6 et la matrice d'éléments à transmittance variable 7, notamment en fonction de signaux de commande entrés par l'utilisateur ou en provenance de divers capteurs de l'afficheur tête haute 1, comme cela sera expliqué ci-après.

Le dispositif de génération d'image 3 peut subir une augmentation de sa température due à l'élévation de la température ambiante du véhicule, de la chaleur générée par la source lumineuse 6, et des rayons solaires qui pénètrent dans le boîtier 9 via la fenêtre 11 selon le trajet inverse du faisceau lumineux aval Lv. Après réflexion sur les miroirs de repliement 4 et 5, les rayons solaires peuvent se focaliser en un point de l'écran et entraîner une élévation de sa température

Selon une caractéristique avantageuse de l'invention, le dispositif de génération d'image 1 comporte un système de mesure de la température comportant un film opaque thermiquement conducteur appliqué sur l'une des faces (amont ou aval, relativement au sens de propagation du faisceau) de la matrice d'éléments à transmittance variable, ici sur la face aval.

La figure 2 est une vue de la face aval de la matrice d'éléments à transmittance variable 7, ici équipée du système 12 de mesure de la température.

La matrice d'élément à transmittance variable, ici un écran LCD, comporte une zone périphérique 13 non optiquement utile et une zone centrale 14 optiquement utile. Plus précisément ici, la zone centrale 14 est en partie optiquement utile et comporte plusieurs zones distinctes optiquement utiles 19.

Au sens de l'invention, une zone optiquement utile est une zone destinée à l'affichage d'information, par exemple du texte ou des images. Les éléments, ou pixels, de cette zone sont donc commandés de façon à être optiquement passants au moins une partie du temps. Par zone non optiquement utile, on entend une zone qui n'est pas destinée à l'affichage d'informations. Les éléments, ou pixels, d'une zone non optiquement utile sont à l'état bloqué en permanence. La définition des zones optiquement utiles et non optiquement utiles est commandée par l'unité de commande 20. Classiquement, l'unité de commande 20 est programmée avant la commercialisation du dispositif 3 de façon que les zone optiquement utiles et non optiquement utiles ne puissent pas être modifiées. En effet, les concepteurs du système définissent différentes zones d'affichage des informations fournies au conducteur, sans chevauchement afin de couvrir toutes les situations possiblement rencontrées, et il subsiste donc en général, en dehors de ces zones d'affichage, des zones qui ne sont en revanche utilisées à aucun moment. Il convient de noter qu'une zone optiquement utile dont les pixels passeraient tous temporairement à l'état bloqués reste une zone optiquement utile. Autrement dit, du fait de sa conception, l'unité de commande 20 est configurée ou programmée pour commander à l'état passant ou bloqué, selon l'information à afficher, chaque pixel des zones optiquement utiles et pour commander à l'état bloqué (en permanence) chaque pixel des zones non optiquement utiles.

Le système 12 de mesure de la température comporte un film opaque thermiquement conducteur 15 qui est collé à la face aval de la matrice 7 (relativement au sens de propagation du faisceau lumineux issu de la source lumineuse 6), ici à l'aide d'un matériau adhésif, de préférence résistant à des températures supérieures ou égale 110°C. Le matériau adhésif est par exemple un film réalisé dans un matériau polymère, comme le Polycarbonate (PC) ou le Polyméthacrylate de méthyle (PMMA), une colle optiquement transparente (OCA, « Optical Clear Adhesive », selon le sigle anglo-saxon usuel) ou une feuille acrylique. Le film thermiquement conducteur 15 est ici un film métallique, par exemple un film en cuivre et présente une conductivité thermique de 398 W.m⁻¹.K⁻¹.

Le film thermiquement conducteur 15 est ici recouvert d'un revêtement de couleur noire, par exemple de la peinture. Ainsi, le film thermiquement conducteur 15 est configuré pour absorber les rayonnements de la lumière visible, en particulier les rayonnements dont la longueur d'onde est comprise entre 450 nanomètres et 750 nanomètres. Ici, le film recouvert du revêtement de couleur noir permet d'absorber au moins 98% de ces rayons lumineux.

Le film comporte au moins une première partie 16 qui s'étend dans la zone centrale 14 et une deuxième partie, ou partie périphérique, qui s'étend dans la zone périphérique 13. La première partie et la deuxième partie sont réalisées dans un même film, c'est-à-dire qu'il existe entre elles une continuité de matière.

La deuxième partie est ici en forme de cadre rectangulaire entourant la zone centrale 14. La première partie 16 présente ici une forme de masque, c'est-à-dire qu'elle recouvre la surface de la zone centrale à l'exception des zones distinctes optiquement utiles 19.

En d'autres termes, le film opaque thermiquement conducteur 15 est ici un film rectangulaire dont les dimensions sont supérieures à celles de la zone centrale 14 et comportant des trous traversants dont les contours et emplacement coïncident avec les contours et emplacement des zones distinctes optiquement utiles 19. De préférence, les contours des trous sont distants d'une distance d'au moins un millimètre des contours des zones distinctes optiquement actives 19 (autrement dit, les contours des trous traversant du film peuvent être obtenus à partir des contours des zones distinctes optiquement utile 19 par une homothétie de rapport positif). La première partie 16 est ainsi la partie du film 15 qui s'étend à l'intérieur de la zone centrale et la deuxième partie est la partie du film 15 qui s'étend hors de la zone centrale.

Le système de mesure 12 de la température comporte en outre au moins un capteur de température, par exemple une thermistance, en contact avec la première partie 16 de façon à être thermiquement couplée à celle-ci. Dans cet exemple, le système de mesure comporte deux capteurs de température 21, 24 en contact avec la première partie 16, placé chacun ici de part et d'autre d'une zone distincte optiquement utile 19 (ou de part et d'autre d'un trou du film thermiquement conducteur 15). Les capteurs de température 21 sont ici connectés à l'unité de commande 20 par des fils électriques.

Ainsi, la chaleur générée par les rayons du soleil focalisés en un point de l'écran est absorbée par le film thermiquement conducteur 15 ; la charge thermique est donc répartie dans tout le film et le dispositif est ainsi protégée contre une augmentation locale de la température qui endommagerait l'écran. La répartition de la charge thermique permet une plus grande liberté dans le placement des capteurs de température 21, 24.

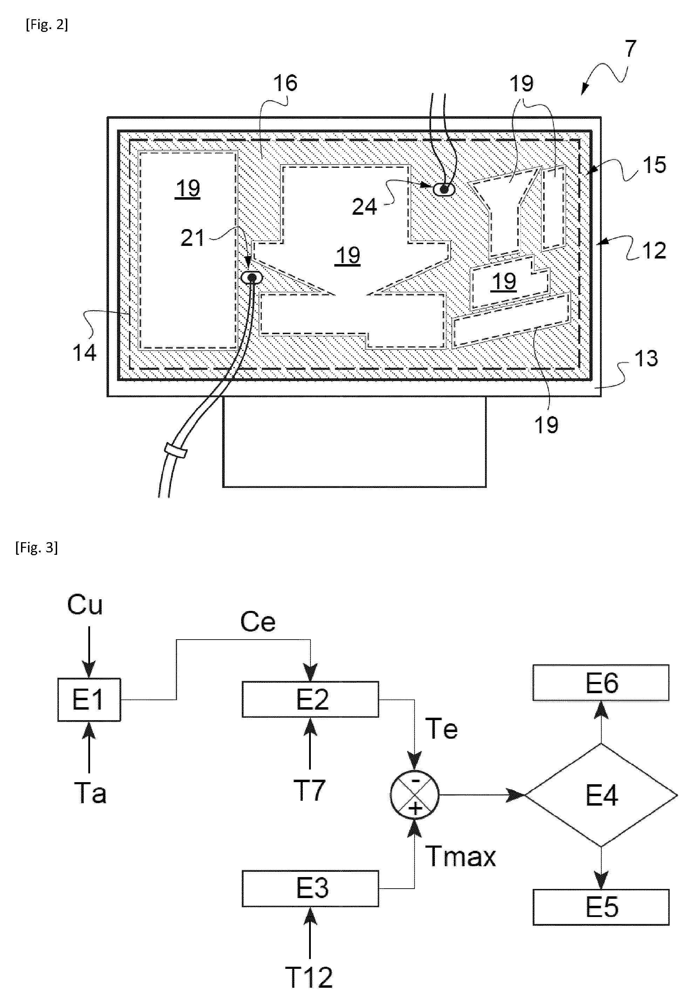

La figure 3 illustre un procédé de gestion de la température d'un dispositif de génération d'images selon l'invention. Ce procédé permet de régler l'intensité lumineuse produite par la source lumineuse 6 en fonction de la température mesurée par le capteur de température 21.

Lors d'une première étape E1 du procédé, l'unité de commande 20 établit une commande de consigne effective de fonctionnement Ce qui déterminera la valeur de l'intensité lumineuse émise par la source lumineuse 6. A cette fin, l'unité de commande 20 tient compte d'une valeur de consigne utilisateur Cu, par exemple la valeur d'intensité lumineuse souhaitée par le conducteur, qu'il saisit par exemple depuis le tableau de bord du véhicule, et de la température ambiante Ta du dispositif de génération d'image 3, par exemple mesurée par un capteur dédié situé dans ou à proximité du dispositif de génération d'image 3. Par exemple, si la température ambiante est faible et/ou que la valeur de consigne utilisateur est faible, alors le risque de surchauffe de la matrice d'éléments à transmittance variable 7 sera faible et la valeur de la commande de consigne effective Ce sera identique à la valeur de consigne utilisateur Cu. En revanche, si la température ambiante est élevée et/ou que la valeur de consigne utilisateur Cu est élevée, alors le risque de surchauffe de la matrice 7 sera grand et l'unité de commande générera une valeur de consigne effective Ce inférieure à la valeur de consigne utilisateur Cu, afin que la source lumineuse 6 produise une intensité lumineuse plus faible que celle demandée par le conducteur.

Dans une deuxième étape du procédé E2, l'unité de commande 20 estime la température de la matrice d'élément à transmittance variable 7 en fonction de la valeur de consigne effective et de la température de la source lumineuse T7, par exemple mesurée à l'aide d'un capteur dédié placé sur ou à proximité de la source lumineuse 6.

Dans une troisième étape E3, l'unité de commande 20 enregistre la valeur maximale Tmax de température mesurée par le capteur de température 21.

Dans une quatrième étape E4 l'unité de commande 20 compare la température estimée Te de la matrice d'élément à transmittance variable 7 (estimée à l'étape E2) et la température maximale Tmax mesurée par le capteur thermique et, si la température mesurée est supérieure à la température estimée Te, l'unité de commande 20 réduit l'intensité lumineuse produite par la source lumineuse (étape E5). Sinon, l'unité de commande 20 maintient la luminosité de l'image virtuelle (étape E6).

L'invention n'est pas limitée au mode de réalisation décrit précédemment en lien avec la figure 2. En particulier, l'invention n'est pas limitée à une première partie qui couvre entièrement la partie non optiquement utile de la zone centrale.

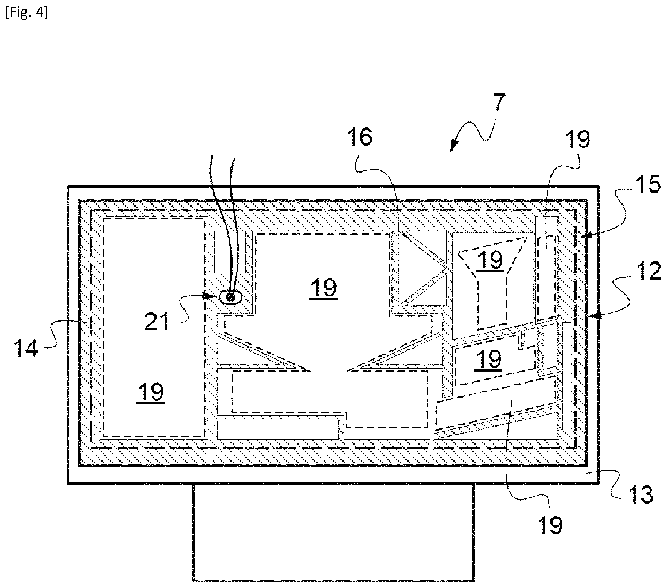

Par exemple, comme l'illustre la figure 4, la première partie peut comprendre un maillage fait de bandes de films de largeurs constantes et identiques qui s'étendent dans la partie non optiquement utile de la zone centrale. Dans ce mode de réalisation, la première partie comporte en outre au moins une portion de film présentant une surface plus grande de façon à recevoir un capteur de température 21.

Bien qu'il ait été décrit précédemment un film thermiquement conducteur placé sur la face aval de la matrice d'élément à transmittance variable 7, l'invention couvre des modes de réalisation dans lesquelles le film thermiquement conducteur 15 est placé sur la face amont de la matrice d'éléments à transmittance variable 7, ou encore dans lesquels chaque face de la matrice d'éléments à transmittance variable 7 est couverte par un film distinct. Dans ce dernier cas, chaque film est soit couplé à son propre capteur de température soit couplé à un capteur de température commun aux deux films. En outre, la géométrie des films peut être identiques ou différentes (par exemple, la configuration du mode de réalisation de la figure 2 sur la face aval et la configuration du mode de réalisation de la figure 4 sur la face amont).

En outre, l'invention n'est pas limitée à un dispositif de génération d'images comportant un seul système de mesure de la température par face, ni à un système de mesure de la température comportant un seul film, ni à un nombre donné de capteurs de température. Selon les applications envisagées, le ou les systèmes de mesure peuvent comporter plusieurs films sur une même face de la matrice d'éléments à transmittance variable, placés à différents endroits de la matrice, et chaque film peut être couplé à un nombre quelconque de capteurs de température.

La surface de la matrice d'éléments à transmittance variable couverte par le film n'est pas limitée aux modes de réalisation décrits ci-avant, le film pouvant couvrir une surface plus ou moins grande de l'écran, par exemple 5%, 20%, 50%, etc.

Il a été décrit précédemment un film thermiquement conducteur métallique en cuivre. L'invention est néanmoins compatible avec tout film thermiquement conducteur, métallique ou non, par exemple en feuille de carbone, en graphite, en alliage d'aluminium ou en matériaux céramiques. Les matériaux céramiques présentent l'avantage de présenter de meilleures propriétés thermiques que le verre.

Enfin, l'invention n'est pas limitée à un écran prenant la forme d'une matrice d'élément à transmittance variable, mais est compatible avec tout écran, notamment un diffuseur dont la face amont est configurée pour être balayée par un faisceau laser et sur laquelle se forme l'image (technologie « laser scan »).

Diverses autres modifications peuvent être apportées à l'invention dans le cadre des revendications annexées.

## Revendications

1. Dispositif de génération d'images comportant un écran (7) qui comprend une zone centrale (14) au moins en partie optiquement active et une zone périphérique (13) optiquement inactive, le dispositif (3) comprenant un système de mesure de la température (12) de l'écran (7) qui comporte
- un capteur de température (21, 24) et
- un film opaque thermiquement conducteur (15) configuré pour être en contact avec une face de l'écran (7), le film comportant au moins une première partie (16) qui s'étend dans une zone non optiquement utile de la zone centrale (14) et qui est en contact avec et thermiquement couplé au capteur de température (21, 24).

2. Dispositif de génération d'images selon la revendication 1, dans lequel le film opaque thermiquement conducteur comporte une deuxième partie qui s'étend dans la zone périphérique (13) et qui présente une continuité de matière avec la première partie (16).

3. Dispositif selon la revendication 1 ou 2, dans lequel la première partie (16) est située à une distance d'au moins un millimètre de toute zone optiquement utile de la zone centrale.

4. Dispositif selon l'une quelconque des revendications 1 à 3, dans lequel la première partie (16) s'étend dans la zone centrale (14) sur une longueur supérieure ou égale à trois millimètres.

5. Dispositif selon l'une quelconque des revendications 1 à 4, comportant une source lumineuse (6) configurée pour émettre un flux lumineux (Lm, Lv) au travers de l'écran (7) et dans lequel le film opaque thermiquement conducteur (15) est en contact avec la face aval de l'écran (7), relativement au sens de propagation du flux lumineux.

6. Dispositif selon l'une quelconque des revendication 1 à 5, dans lequel le film thermiquement conducteur (15) présente une conductivité thermique supérieure ou égale à 398 W.m⁻¹.K⁻¹.

7. Dispositif selon l'une quelconque des revendication 1 à 6, dans lequel le film opaque thermiquement conducteur (15) est configuré pour absorber 90% des rayon lumineux dont la longueur d'onde est comprise entre 450 nanomètres et 750 nanomètres.

8. Dispositif selon l'une quelconque des revendications 1 à 7, dans lequel le film thermiquement conducteur (15) est collé à l'écran à l'aide d'un matériau adhésif résistant à des températures supérieures ou égale 110°C.

9. Procédé de gestion de la température d'un dispositif de génération d'images selon l'une quelconque des revendication 1 à 8 au travers duquel une source lumineuse émet un faisceau lumineux, comportant une comparaison d'une température estimée de l'écran et de la température mesurée par le capteur thermique et, si la température mesurée est supérieure à la température estimée, une réduction de l'intensité lumineuse produite par la source lumineuse.

10. Procédé de gestion de la température selon la revendication 9, dans lequel la température estimée de l'écran est obtenue à partir d'une mesure de la température d'une source lumineuse du dispositif de génération d'image et d'une mesure de la température ambiante.

11. Afficheur tête haute comportant un dispositif de génération d'images (3) selon l'une quelconque des revendication 1 à 8 et une unité de commande (20) configurée pour commander l'écran (7) et définir les zones optiquement utiles (19) et les zones non optiquement utiles (13) de la zone centrale de l'écran.

## Patentansprüche

1. Bildgebungsvorrichtung mit einem Bildschirm (7), der einen zumindest teilweise optisch aktiven zentralen Bereich (14) und einen optisch inaktiven peripheren Bereich (13) umfasst, wobei die Vorrichtung (3) ein System (12) zum Messen der Temperatur des Bildschirms (7) umfasst, das Folgendes umfasst
- einen Temperatursensor (21, 24) und
- eine thermisch leitfähige, undurchsichtige Folie (15), die so konfiguriert ist, dass sie mit einer Seite des Bildschirms (7) in Kontakt steht, wobei die Folie mindestens einen ersten Teil (16) umfasst, der sich in einem optisch nicht nutzbaren Bereich des zentralen Bereichs (14) erstreckt und mit dem Temperatursensor (21, 24) in Kontakt steht und thermisch mit diesem gekoppelt ist.

2. Bilderzeugungsvorrichtung nach Anspruch 1, wobei die thermisch leitfähige undurchsichtige Folie einen zweiten Abschnitt aufweist, der sich in den Randbereich (13) erstreckt und eine materielle Kontinuität mit dem ersten Abschnitt (16) aufweist.

3. Vorrichtung nach Anspruch 1 oder 2, wobei der erste Teil (16) in einem Abstand von mindestens einem Millimeter von jedem optisch nutzbaren Bereich des zentralen Bereichs angeordnet ist.

4. Vorrichtung nach einem der Ansprüche 1 bis 3, wobei sich der erste Teil (16) im zentralen Bereich (14) über eine Länge von mindestens drei Millimetern erstreckt.

5. Vorrichtung nach einem der Ansprüche 1 bis 4, mit einer Lichtquelle (6), die so konfiguriert ist, dass sie einen Lichtstrom (Lm, Lv) durch den Bildschirm (7) emittiert, und wobei die thermisch leitfähige undurchsichtige Folie (15) in Kontakt mit der stromabwärtigen Seite des Bildschirms (7) in Bezug auf die Ausbreitungsrichtung des Lichtstroms steht.

6. Vorrichtung nach einem der Ansprüche 1 bis 5, wobei die wärmeleitende Folie (15) eine Wärmeleitfähigkeit von mindestens 398 W.m⁻¹ .K⁻¹ aufweist.

7. Vorrichtung nach einem der Ansprüche 1 bis 6, wobei die thermisch leitfähige undurchsichtige Folie (15) so konfiguriert ist, dass sie 90 % der Lichtstrahlen mit einer Wellenlänge zwischen 450 Nanometern und 750 Nanometern absorbiert.

8. Vorrichtung nach einem der Ansprüche 1 bis 7, wobei die wärmeleitende Folie (15) mit einem Klebstoff, der Temperaturen von mindestens 110 °C standhält, auf den Bildschirm geklebt ist.

9. Verfahren zur Temperaturregelung einer Bilderzeugungsvorrichtung gemäß einem der Ansprüche 1 bis 8, durch die eine Lichtquelle einen Lichtstrahl aussendet, mit einem Vergleich einer geschätzten Temperatur des Bildschirms mit der vom Wärmesensor gemessenen Temperatur und, wenn die gemessene Temperatur höher ist als die geschätzte Temperatur, eine Verringerung der von der Lichtquelle erzeugten Lichtintensität.

10. Verfahren zur Temperaturregelung gemäß Anspruch 9, wobei die geschätzte Temperatur des Bildschirms aus einer Messung der Temperatur einer Lichtquelle der Bildgebungsvorrichtung und einer Messung der Umgebungstemperatur ermittelt wird.

11. Head-up-Display mit einer Bilderzeugungsvorrichtung (3) gemäß einem der Ansprüche 1 bis 8 und einer Steuereinheit (20), die so konfiguriert ist, dass sie den Bildschirm (7) steuert und die optisch nutzbaren Bereiche (19) und die nicht optisch nutzbaren Bereiche (13) des zentralen Bereichs des Bildschirms definiert.

## Claims

1. Image generating device comprising a screen (7) which includes a central area (14) that is at least partially optically active and a peripheral area (13) that is optically inactive, the device (3) comprising a system for measuring the temperature (12) of the screen (7) which includes
- a temperature sensor (21, 24) and
- a thermally conductive opaque film (15) configured to be in contact with one face of the screen (7), the film comprising at least a first portion (16) which extends into a non-optically useful area of the central area (14) and which is in contact with and thermally coupled to the temperature sensor (21, 24).

2. Image generating device according to claim 1, wherein the thermally conductive opaque film comprises a second portion extending into the peripheral area (13) and being in material continuity with the first portion (16).

3. Device according to claim 1 or 2, wherein the first portion (16) is located at a distance of at least one millimetre from any optically useful area of the central area.

4. Device according to any of claims 1 to 3, wherein the first part (16) extends into the central area (14) over a length greater than or equal to three millimetres.

5. Device according to any of claims 1 to 4, comprising a light source (6) configured to emit a luminous flux (Lm, Lv) through the screen (7) and in which the thermally conductive opaque film (15) is in contact with the downstream face of the screen (7), relative to the direction of propagation of the luminous flux.

6. Device according to any of claims 1 to 5, wherein the thermally conductive film (15) has a thermal conductivity greater than or equal to 398 W.m⁻¹.K⁻¹.

7. Device according to any of claims 1 to 6, wherein the opaque thermally conductive film (15) is configured to absorb 90% of light rays with a wavelength between 450 nanometres and 750 nanometres.

8. Device according to any of claims 1 to 7, wherein the thermally conductive film (15) is bonded to the screen using an adhesive material resistant to temperatures greater than or equal to 110°C.

9. Method for managing the temperature of an image-generating device according to any of claims 1 to 8, through which a light source emits a light beam, comprising comparing an estimated temperature of the screen with the temperature measured by the thermal sensor and, if the measured temperature is higher than the estimated temperature, a reduction in the light intensity produced by the light source.

10. A temperature management method according to claim 9, wherein the estimated temperature of the screen is obtained from a measurement of the temperature of a light source of the image generating device and a measurement of the ambient temperature.

11. Head-up display comprising an image generating device (3) according to any one of claims 1 to 8 and a control unit (20) configured to control the screen (7) and define optically useful areas (19) and non-optically useful areas (13) of the central area of the screen.
